Europäisches Patentamt

European Patent Office

Office européen des brevets

(11) Veröffentlichungsnummer : **0 016 384**
**B1**

(12) # EUROPÄISCHE PATENTSCHRIFT

(45) Veröffentlichungstag der Patentschrift :
11.05.83

(51) Int. Cl.³ : **F 16 B 2/00**, F 16 B 7/04

(21) Anmeldenummer : **80101172.7**

(22) Anmeldetag : **07.03.80**

(54) **Befestigungselement zum Einsatz in C-förmige Profilschienen.**

(30) Priorität : 24.03.79 DE 2911627

(43) Veröffentlichungstag der Anmeldung :
01.10.80 Patentblatt 80/20

(45) Bekanntmachung des Hinweises auf die Patenterteilung : 11.05.83 Patentblatt 83/19

(84) Benannte Vertragsstaaten :
BE CH FR IT NL

(56) Entgegenhaltungen :
AT B 353 063
DE A 1 923 669
DE C 2 440 454
FR A 2 144 552
FR A 2 396 197
US A 2 676 680
US A 2 696 139
US A 3 286 578

(73) Patentinhaber : DORNIER GMBH
Postfach 1420
D-7990 Friedrichshafen (DE)

(72) Erfinder : Frischknecht, Erich
Schlehenweg 12
D-7990 Friedrichshafen 1 (DE)

(74) Vertreter : Landsmann, Ralf, Dipl.-Ing.
Kleeweg 3
D-7990 Friedrichshafen 1 (DE)

Befestigungselement zum Einsatz in C-förmige Profilschienen

Die Erfindung betrifft ein Befestigungselement zum Einsatz in C-förmige Profilschienen mit einem innerhalb der Schiene befindlichen Rechteck-körper mit gerundeten Stirnseiten, der ausgerichtet in der Profilschiene gehalten ist und einen aus der Profilschiene herausragenden Bolzen aufweist, wobei ein den Rechteckkörper umgreifendes U-förmiges Profilstück vorhanden ist, das mit einer Bohrung für den Bolzen versehen ist und dessen Seitenflächen die Führungsflächen des Schlitzes der Schiene berühren und die Wandstärke des U-förmigen Profilstücks im Bereich des Schlitzes der Schiene geringer ist als die Wandstärke der Schiene.

Ein Befestigungselement dieser Art ist aus DE-C2-24 40 454 bekannt. Aus den US-A-3 286 578, 2 676 680 und 2 696 139 ist es bekannt, zur Aufhängung von Bauteilen an C-förmigen Schienen Rechteck-Körper in die Schiene einzubringen, zu verdrehen und gegen Drückdrehen zu sichern. Dies geschieht beim Gegenstand der US-A-3 286 578 mittels einer Feder, deren Federkraft aber bei Anziehen einer aus der Schiene ragenden Mutter oder dergleichen überwunden werden kann, wodurch der Rechteck-Körper aus der Schiene herausfallen kann. Auch der Gegenstand der US-A-2 676 680 bietet wenig Sicherheit gegen ein Herausfallen des Rechteck-Körpers, da nur Reibschluss zwischen den Schenkeln der Schiene und dem Rechteck-Körper vorhanden ist. Eine formschlüssige Sicherung ermöglicht US-A-2 696 139. Dazu ist es aber notwendig, dass die Ränder der Schiene nach innen gebördelt werden und dass Nuten in den Rechteck-Körper eingefräst sind. Ferner muss eine Feder den Rechteck-Körper unter Verspannung gegen die umgebördelten Ränder der Schiene drücken. Selbst diese aufwendige Gestaltung stellt nicht sicher, dass der Rechteck-Körper beim Verdrehen seine ausgerichtete Lage in der Schiene einnehmen muss und bei Belastung trägt nur ein Teil des Rechteck-Körpers, so dass sich die Schiene plastisch verformen kann.

Bekannt sind ferner Klammern zur Befestigung von Kabeln an Profilschienen, die aufgrund ihrer äusseren Raumform in die Zungen C-förmiger Profilschienen einschnappen. Diese Klammern ragen weit aus den Schienen heraus und sind für grössere Belastungen nicht geeignet.

Dem Gegenstand des deutschen Patents 24 40 454 liegt die Aufgabe zugrunde, die durch den Stand der Technik bekannt gewordenen Befestigungselemente insoweit zu verbessern, dass bei Beibehaltung der Sicherung gegen Rückdrehen auch unter Belastung und beim Erreichen kleinster Flächenpressung bei Belastung vor allem ein Einführen von der geschlitzten Seite her, also senkrecht zur Längsausdehnung der Profilschiene ermöglicht wird.

Die Befestigungselemente gemäss dem deutschen Patent 24 40 454 haben sich in der Praxis hervorragend bewährt und sind vielseitig verwendet worden. Sie können jedoch an den Stellen der C-förmigen Profilschiene nicht verwendet werden, an denen diese mittels unversenkter Schrauben an einer Wand oder einer Decke befestigt ist. Ragt nämlich der Schraubenkopf über den Boden der Profilschiene hinaus, so behindern sich Schraubenkopf und Rechteck-Körper bzw. Schraubenkopf und ein mit dem Rechteck-Körper einstückig verbundener Zapfen.

Die Aufgabe der Erfindung besteht darin, Befestigungselemente der im Oberbegriff des Anspruches angegebenen Art insoweit zu verbessern, dass beim Beibehalten der bei diesem Stand der Technik bereits erreichten Vorteile der Sicherung gegen Rückdrehen auch unter Belastung und des Erreichens kleinster Flächenpressung bei Belastung und der Möglichkeit des Einführens von der geschlitzten Seite her, also senkrecht zur Längsausdehnung der Profilschiene, darüber hinaus vor allem erreicht wird, dass das Befestigungselement über die gesamte Länge der Schiene und auch an den Stellen, an denen diese mittels unversenkter Schraube an einer Wand oder einer Decke befestigt ist, einsetzbar ist und zwar derart, dass zur grösstmöglichen Kräfteübertragung die genannten unversenkten Schrauben grösstmögliche Schraubenköpfe aufweisen können und ein Bolzen mit grösstmöglicher Gewindelänge in den Rechteck-Körper zur Befestigung eines an der Schiene einzuschraubenden Teiles eingeschraubt werden kann.

Zur Lösung dieser Aufgabe sind bei der Erfindung die im kennzeichnenden Teil des Anspruchs angegebenen Gestaltungsmerkmale vorgesehen.

Beim vorliegenden Gegenstand ist erfinderisch, dass es trotz Anordnung einer grossen Ausnehmung, die zur Aufnahme der Schenkel des U-förmigen Profilstücks geeignet ist, gelingt, einen Gewindebolzen durch Vergrösserung der Wandstärke des Rechteck-Körpers in den Bereich des Profilstücks hinein sicher zu befestigen, ohne dass dadurch Funktion und Wirkungsweise des Profilstücks verändert werden.

Die Merkmale der Erfindung und deren technische Vorteile ergeben sich auch aus der nachfolgenden Beschreibung eines Ausführungsbeispiels in Verbindung mit dem Anspruch und der Zeichnung.

Es zeigen :

Figur 1 ein erfindungsgemässes Befestigungselement in axonometrischer Darstellung und

Figur 2 das Befestigungselement von Fig. 1 in Schnittdarstellung.

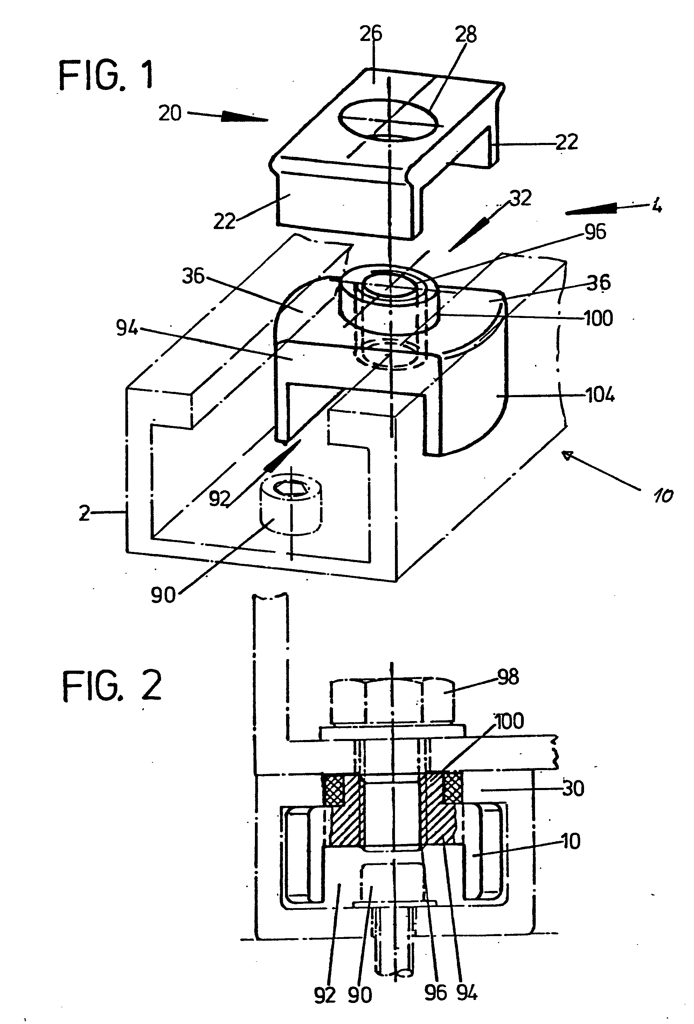

Fig. 1 zeigt eine Schiene 2, die im Querschnitt C-förmig profiliert ist. Die Schiene ist mittels einer Schraube 90 an einer Wand befestigt. In dieser Schiene 2 befindet sich ein Befestigungselement 4, das aus Rechteck-Körper 10 besteht. Rechteck-Körper 10 wird von einem U-förmigen Profilstück 20 umgriffen, das vorzugsweise aus Kunststoffmaterial hergestellt ist und in Schenkeln 22 endet. Die Seitenflächen des Profilstücks 20 berühren die Führungsflächen des Schlitzes 32 der Schiene. Die Wandstärke des Bodens 26 des Profilstücks 20 ist geringer oder gleich der Wandstärke 30 (Fig. 2) der Schiene 2 im Bereich ihres Schlitzes 32, wodurch der Rechteck-Körper 10 beim Anziehen einer in Fig. 1 nicht gezeigten Schraube (oder der Mutter eines Bolzens ; nicht gezeigt) gegen die Schenkel 36 der Profilschiene 2 verspannt wird.

Wie auch aus Fig. 2 hervorgeht, weist der Rechteck-Körper 10 eine rechteckförmige Ausnehmung 92 auf deren Breite gleich der Breite des Schlitzes 32 der Schiene 2 ist. In der Wand 94 des Rechteck-Körpers 10 befindet sich eine Gewindebohrung 96 zur Aufnahme einer Schraube 98. Jedoch reicht die Gewindelänge im Rechteck-Körper zu einer sicheren Befestigung der Schraube 98 nicht aus. Der Rechteck-Körper ist deshalb mit einem Zapfen 100 mit Gewindebohrung versehen, dessen Höhe geringer ist als die Wandstärke 30 der Schiene 2 und/oder des Bodens 26 des Profilstücks 20. Das Durchgangsloch 28 des Profilstücks 20 ist so gross bemessen, dass der Zapfen 100 darin Platz hat. Wie beide Figuren deutlich zeigen, reicht die Länge der Gewindebohrung 96 zur sicheren Befestigung der Schraube 98 aus.

Deutlich ist aus Fig. 1 auch die Gestaltung des Befestigungselements 4 mit aussen abgerundeten Seitenwänden 104 und rechteckförmiger Ausnehmung 92 zu erkennen.

Zur Montage wird Befestigungselement 4 — um 90° gegenüber der gezeigten Stellung verdreht — in den Schlitz 32 der Schiene 2 eingeführt und kann — nach Drehung in die gezeigte Stellung — in der Schiene 2 unbehindert von Schraubenköpfen 90 beliebig verschoben werden. Vor oder nach dem Verschieben wird das Profilstück 20 aufgeschoben. Es bewirkt, dass das Befestigungselement in der Schiene 2 exakt die gezeichnete Lage einnimmt und beim Tragen von Lasten nur eine geringe Flächenpressung auf die Schenkel 36 ausgeübt wird.

## Ansprüche

Befestigungselement (4) zum Einsatz in C-förmige Profilschienen (2), mit einem innerhalb der Schiene (2) befindlichen Rechteckkörper (10) mit gerundeten Stirnseiten (104), der ausgerichtet in der Profilschiene (2) gehalten ist und einen aus der Profilschiene herausragenden Bolzen (98) aufweist, wobei ein den Rechteckkörper (10) umgreifendes U-förmiges Profilstück (20) vorhanden ist, das mit einer Bohrung (28) für den Bolzen versehen ist und dessen Seitenflächen die Führungsflächen des Schlitzes (32) der Schiene berühren und die Wandstärke des U-förmigen Profilstücks (20) im Bereich des Schlitzes (32) der Schiene geringer ist als die Wandstärke (30) der Schiene, dadurch gekennzeichnet, dass der Rechteckkörper (10) an seinem Boden eine Ausnehmung (92) aufweist, die rechteckförmig ist und eine Breite hat, die gleich der Breite des Schlitzes (32) der C-förmigen Profilschiene ist, dass der Rechteck-Körper (10) an seinem oberen Ende mit einem Zapfen (100) versehen ist, dass Rechteck-Körper (10) mit Zapfen (100) ein Gewindeloch (96) zur Aufnahme eines Bolzens (98) mit Gewinde aufweisen, und dass die Bohrung (28) des U-förmigen Profilstücks (20) dem Durchmesser des Zapfens (100) entspricht.

## Claims

Fastening element (4) for the insertion in C-shaped profile rails (2), comprising a rectangular body (10) with rounded end faces (104), which rectangular body (10) is situated in the profile rail (2) and held aligned or positioned in the rail (2) and has a bolt (98) projecting out of the profile rail, a U-shaped profile member (20) embracing the rectangular body (10) being provided, which profile member (20) has a bore (28) for the bolt, the lateral surfaces of which member (20) touch the guide surfaces of the slot (32) of the rail, and the wall thickness of the U-shaped profile member (20) being less in the region of the slot (32) of the rail than the wall thickness (30) of the rail, characterised in that the rectangular body (10) has a recess (92) at the bottom thereof, which recess is rectangular and equal in width to the slot (32) of the C-shaped profile rail, in that the rectangular body (10) has a peg, lug or the like (100) at its upper end, in that the rectangular body (10) with peg, lug or the like (100) has a threaded hole (96) to receive a threaded bolt (98) and in that the bore (28) of the U-shaped profile member (20) corresponds to the diameter of the peg, lug or the like (100).

## Revendications

Élément de fixation (4) destiné à être introduit dans des rails profilés (2) en forme de C, comprenant un corps rectangulaire (10) à côtés frontaux arrondis (104) qui est maintenu droit dans le rail profilé (2) et présente un boulon (98) faisant saillie du rail profilé, une pièce de profil en forme de U (20) s'engageant sur le corps rectangulaire (10), ladite pièce possédant un orifice (28) pour le boulon et des surfaces latérales en contact avec les surfaces de guidage de la fente (32) du rail, l'épaisseur de paroi de la pièce profilée en forme de U (20) étant, dans la zone de la fente (32) du rail, plus faible que l'épaisseur de paroi (30) du rail, caractérisé par le fait que le corps rectangulaire (10) présente à son fond un évidement (92) qui est de forme rectangulaire et possède une largeur égale à la largeur de la fente (32) du rail profilé en forme de C, que le corps rectangulaire (10) est muni à son extrémité supérieure d'un tenon (100), que le corps rectangulaire (10) avec le tenon (100) présente un trou taraudé (96) pour la réception d'un boulon fileté (98) et que le trou (28) de la pièce profilée en forme de U (20) correspond au diamètre du tenon (100).

FIG. 1

FIG. 2